# EUROPÄISCHE PATENTSCHRIFT

(11) **EP 1 913 457 B1**
(45) Veröffentlichungstag und Bekanntmachung des Hinweises auf die Patenterteilung: **24.12.2014**
(21) Anmeldenummer: 06778101.3
(22) Anmeldetag: 01.08.2006
(51) Int. Cl.: G06F 1/10, G06F 1/08, G06F 21/00, H04L 25/08

(54) **GALS-SCHALTUNG UND VERFAHREN ZUM BETRIEB EINER GALS-SCHALTUNG**
GALS CIRCUIT AND METHOD FOR THE OPERATION THEREOF
CIRCUIT GALS ET PROCEDE POUR LE FAIRE FONCTIONNER

(30) Priorität: 01.08.2005 EP 05107104; 12.09.2005 DE 102005044115
(43) Veröffentlichungstag der Anmeldung: 23.04.2008
(73) Patentinhaber: IHP GmbH-Innovations for High Performance Microelectronics / Leibniz-Institut für innovative Mikroelektronik, 15236 Frankfurt / Oder (DE)
(72) Erfinder: GRASS, Eckhard, 12589 Berlin (DE); KRSTIC, Milos, 15232 Frankfurt/Oder (DE); WINKLER, Frank, 16341 Panketal (DE)
(74) Vertreter: Eisenführ Speiser
(86) Internationale Anmeldenummer: PCT/EP2006/064898
(87) Internationale Veröffentlichungsnummer: WO 2007/014949

(56) Entgegenhaltungen:
- EP-A- 1 213 870
- EP-A1- 0 613 074
- EP-A2- 1 435 694
- WO-A-01/37462
- WO-A-99/63696
- WO-A-2004/066526
- KR-A- 20040 093 872
- US-A- 5 550 489

## Beschreibung

In den vergangenen Jahren sind neue Kommunikationssysteme mit einer Geschwindigkeit definiert, entworfen und standardisiert worden, die in der früheren Vergangenheit undenkbar war. Schnell veränderliche Märkte lassen den zeitlichen Druck auf Systemdesigner immer größer werden. Es ist daher notwendig, die Zeitspanne bis zum Markteintritt eines neuen Produktes auf das notwendige Minimum zu reduzieren, um eine erfolgreiche kommerzielle Anwendung neuer Produkte zu ermöglichen.

Mit dieser Entwicklung geht eine steigende Nachfrage nach sogenannten Intellectual Property Blocks (IP-Blocks) im Bereich der Signalverarbeitung und Kommunikationstechnologie einher. Die Verwendung verifizierter und getesteter IP-Blocks kann die Entwurfszeit eines Systems signifikant reduzieren. Jedoch ist die Taktkoordinierung für ein komplexes System nach wie vor nicht trivial. Dies gilt insbesondere dann, wenn mehrere Taktdomänen und ein Takt-Gating verwendet werden.

Eine mögliche, beispielsweise aus der Veröffentlichung WO 2004/066526 A2 bekannte Lösung dieser Probleme stellt die Entwicklung Global Asynchroner Lokal Synchroner (GALS) Schaltungen dar. Die GALS-Technologie trägt dazu bei, die Systemintegration durch Verwendung existierender GALS-IP-Blocks zu vereinfachen und zu beschleunigen.

Eine verbleibende Problemstellung bei der Entwicklung komplexer Schaltungssysteme ist jedoch die Reduzierung elektromagnetischer Interferenz (EMI). Insbesondere bei Schaltungsdesigns mit gemischten, also analogen und digitalen, Signalen kann das über Leitungen zur Leistungsversorgung, das Substrat und die Drahtkapazitäten und -induktivitäten eingeführte Rauschen die Arbeitsleistung analoger Schaltungsteile empfindlich stören.

Bei integrierten Schaltungen, die gänzlich synchron getaktet sind, werden zur Verringerung elektromagnetischer Interferenzen in einem Taktsignalpfad JitterGeneratoren vorgesehen, die ein Taktsignal zeitlich verzögern. Die Dauer der Verzögerung wird beispielsweise in Abhängigkeit eine Folge von Zufallszahlen bestimmt. Schaltungen mit einem solchen Jitter-Generator sind beispielsweise aus den Veröffentlichungen WO 01/37462 A1, EP 1 435 694 A2 und EP 1 213 870 A1 bekannt.

Aus der Veröffentlichung WO99/63696 ist der Einsatz eines Jitter-Generators zur Erhöhung der Sicherheit einer Kryptographievorrichtung bekannt.

Ein weiteres Problem, insbesondere für Schaltungen im kryptographischen Bereich besteht darin, dass aus dem momentanen Stromverbrauch einer Schaltung auf ihre Funktionsweise geschlossen werden kann. Damit können kryptographische Verfahren und Codes identifiziert und "geknackt" werden.

Das der Erfindung zugrunde liegende technische Problem ist es daher, eine GALS-Schaltung und ein Verfahren zum Betreiben einer GALS-Schaltung anzugeben, das die elektromagnetische Interferenz reduziert und die Integration komplexer Chips mit gemischten Signalen erleichtert.

Gemäß einem ersten Aspekt der Erfindung wird das genannte technische Problem durch eine Global Asynchrone Lokal Synchrone (GALS-)Schaltung nach Anspruch 1 gelöst.

Bei der erfindungsgemäßen GALS-Schaltung weist die Hüllschaltung unter anderem. einen Anfrageeingang für Anfragesignale (REQ) von einer externen GALS-Schaltung, einen Dateneingang für Datensignale von der externen GALS-Schaltung und einen Takteingang für ein periodisches Taktsignal von einem externen Taktgeber auf. Die Hüllschaltung ist ausgebildet, von dem externen Taktsignal ein internes Taktsignal abzuleiten und über eine interne Taktschnittstelle an das lokal synchrone Schaltungsmodul auszugeben, sowie aus dem externen Anfragesignal ein internes Anfragesignal abzuleiten, welches anzeigt, dass gültige Datensignale am Dateneingang empfangen werden, und das interne Anfragesignal über eine interne Anfrageschnittstelle an das lokal synchrone Schaltungsmodul weiterzuleiten.

Die erfindungsgemäße GALS-Schaltung umfasst einen Jitter-Generator, der im Signalpfad des externen oder internen Anfragesignals der internen Anfrageschnittstelle vorgeschaltet ist, oder im Signalpfad des externen oder internen Taktsignals der internen Taktschnittstelle vorgeschaltet ist, oder der einem Bestätigungseingang der Hüllschaltung für Bestätigungssignale von einer externen GALS-Schaltung vorgeschaltet ist. Der Jitter-Generator ist ausgebildet, das jeweilige Signal, also je nach Anordnung des Jittergenerators das externe oder interne Anfragesignal, das externe oder interne Taktsignal oder das externe Bestätigungssignal, mit einer Zufallssignalverzögerung auszugeben. Einige sinnvolle kombinierte Anordnungen zweier Jittergeneratoren, die einen Jitter zu zwei verschiedenen Signalen hinzufügen, werden unten als Ausführungsbeispiele näher beschrieben.

Der bei der erfindungsgemäßen GALS-Schaltung vorgesehene Jittergenerator erzeugt einen für die GALS-Schaltung lokalen Zeitjitter, auch kurz nur als Jitter bezeichnet, in Form einer zufälligen Signalverzögerung. Das interne Abfragesignal, das interne Taktsignal oder das externe Bestätigungssignal, oder, bei Verwendung zweiter entsprechend angeordneter Jittergeneratoren, sowohl das interne Abfragesignal als auch das interne Taktsignal oder sowohl das externe Bestätigungssignal als auch das interne Taktsignal werden lokal mit einem Jitter versehen. Damit gelingt es, in integrierten Schaltungen, die aus erfindungsgemäßen GALS-Schaltungen aufgebaut sind, nicht nur das Maximum der spektralen Leistungsdichte der elektromagnetischen Abstrahlung der Schaltung zu verringern und damit den Einfluss des digitalen Taktes und seiner Oberwellen auf eventuell integrierte Analogschaltungen. Zusätzlich wird auch der Spitzenstrom verringert. Denn der erzeugte Jitter ist für jede GALS-Schaltung des integrierten Schaltkreises individuell. Auf diese Weise wird die Realisierung komplexer integrierter Schaltkreise mit gemischten (analogen und digitalen) Signalverarbeitungsstufen erleichtert. Gleichzeitig verhindert oder erschwert die in der Erfindung beschriebene Anordnung und das Verfahren die Power Signatur Analyse von Schaltungen. Damit wird das "Knacken" kryptographischer Verfahren und Kodes erschwert.

Gemäß einem zweiten Aspekt der Erfindung wird eine integrierte Schaltung mit einer Vielzahl von erfindungsgemäßen GALS-Schaltungen vorgeschlagen. Die GALS-Schaltungen können auch entsprechend einem der weiter unten beschriebenen Ausführungsbeispiele ausgebildet sein. Weiterhin weist die erfindungsgemäße integrierte Schaltung einen Taktgeber auf, der mit den Hüllschaltungen der GALS-Schaltungen verbunden ist und ein für die GALS-Schaltungen externes Taktsignal erzeugt und an die GALS-Schaltungen ausgibt.

Die erfindungsgemäße integrierte Schaltung kann alternativ auch mehrere Taktgeber aufweisen, die den erfindungsgemäßen GALS-Schaltungen das externe Taktsignal bereitstellen. Dabei erhält jede GALS-Schaltung ihr externes Taktsignal jeweils von einem zugeordneten Taktgeber. Bevorzugt jedoch wird in einer integrierten Schaltung nur ein einziger Taktgeber verwendet, weil dies in der praktischen Anwendung einfacher zu handhaben ist.

Während in synchronen integrierten Schaltungen die Erzeugung von Jitter im zentralen Taktsignal schon bekannt ist, kann durch diese Maßnahme dort der

Spitzenstrom nicht verringert werden. Dies gelingt erst in der integrierten Schaltung gemäß dem zweiten Aspekt der vorliegenden Erfindung, die GALS-Schaltungen gemäß dem ersten Aspekt der Erfindung enthält.

Nachfolgend werden Ausführungsbeispiele der erfindungsgemäßen GALS-Schaltung beschrieben. Zunächst werden Ausführungsbeispiele angegeben, die erfindungsgemäß mögliche Anordnungsalternativen eines oder mehrerer Jittergeneratoren konkretisieren. Bei einem Ausführungsbeispiel der erfindungsgemäßen GALS-Schaltung ist lediglich ein einziger Jitter-Generator vorgesehen, der im Signalpfad des externen Anfragesignals dem Anfrageeingang der Hüllschaltung vorgeschaltet ist.

Ein alternatives Ausführungsbeispiel, bei dem ebenso lediglich ein einziger Jittergenerator vorgesehen ist, sieht vor, dass der Jitter-Generator im Signalpfad des externen Taktsignals dem Takteingang der Hüllschaltung vorgeschaltet ist.

Die beiden genannten Alternativen können zur Bildung eines dritten alternativen Ausführungsbeispiels kombiniert werden. Dabei ist ein erster Jitter-Generator im Signalpfad des externen Anfragesignals dem Anfrageeingang der Hüllschaltung vorgeschaltet und ein zweiter Jitter-Generator im Signalpfad des externen Taktsignals dem Takteingang der Hüllschaltung vorgeschaltet. Auf diese Weise wird die Operation der GALS-Schaltung auch im Time-out-Modus unterstützt.

Ein weiteres alternatives Ausführungsbeispiel sieht vor, dass wiederum nur ein einziger Jittergenerator vorgesehen ist, der im im Signalpfad des externen Bestätigungssignals dem Bestätigungseingang der Hüllschaltung vorgeschaltet ist.

Auch dieses letztgenannte Ausführungsbeispiel kann zur Bildung eines weiteren alternativen Ausführungsbeispiels um einen zweiten Jittergenerator ergänzt werden. In der GALS-Schaltung dieses Ausführungsbeispiels ist ein erster Jitter-Generator im Signalpfad des externen Bestätigungssignals dem Bestätigungseingang der Hüllschaltung vorgeschaltet und ein zweiter Jitter-Generator im Signalpfad des externen Taktsignals dem Takteingang der Hüllschaltung vorgeschaltet.

Eine alternative Konfiguration der erfindungsgemäßen GALS-Schaltung sieht vor, dass lediglich ein Jittergenerator im Signalpfad des internen Taktsignals zwischen dem Takteingang und der internen Taktschnittstelle, welche den Takt für das lokal synchrone Modul bereitstellt, angeordnet ist. Eine Kombination dieser Konfiguration mit vorgenannten Ausführungsbeispielen ist nicht sinnvoll und im Rahmen der vorliegenden Erfindung nicht vorgesehen.

Sowohl eine Konstellation mit dem ersten und dem zweiten Jittergenerator als auch eine Konstellation mit einem dritten Jittergenerator wurden getestet und zeigen ähnliche positive Ergebnisse. Anzumerken ist jedoch, dass die zweite Variante mit dem dritten Jittergenerator weniger Chipfläche beansprucht und eine geringere Energieaufnahme aufweist.

Die vorstehend verwendete Kennzeichnung eines ersten, zweiten und dritten Jittergenerators dient zur Unterscheidung der Anordnung dieser Jittergeneratoren. Es kann sich bei allen Jittergeneratoren um ansonsten gleichartige Komponenten handeln, deren nähere Ausgestaltung Gegenstand nachfolgend beschriebener weiterer Ausführungsbeispiele ist.

Der Jittergenerator (bzw. die Jittergeneratoren) enthält vorzugsweise ein programmierbares Verzögerungselement. Das Verzögerungselement umfasst einen Signaleingang, einen Signalausgang und einen Steuereingang. Das Verzögerungselement ist ausgebildet, ein Signal am Signaleingang zu empfangen und es mit einer Verzögerung am Signalausgang auszugeben. Der Betrag der Verzögerung hängt von einem Steuersignal am Steuereingang ab. Die Verzögerung ist eine Zeitspanne, die der Zeitdifferenz zwischen dem Austreten des Signals am Signalausgang bei fehlendem Steuersignal am Steuereingang und dem Auftreten des Signals am Signalausgang bei anliegendem Steuersignal am Steuereingang entspricht. Der genaue Betrag der Verzögerung kann von einem Merkmal des Steuersignals abhängen. Ein geeignetes Merkmal des Steuersignals ist beispielsweise die Signalamplitude oder der Betrag der Signalamplitude.

Um eine Streuung des Jitters um einen Mittelwert zu ermöglichen, kann das programmierbare Verzögerungselement ausgebildet sein, bei Fehlen eines Steuersignals bzw. einem Steuersignal mit dem Betrag 0, das am Signaleingang empfangene Signal mit einer vorbestimmten mittleren Verzögerung zu versehen und je nach Vorzeichen und Betrag des Steuersignals entweder eine geringere oder eine größere Verzögerung als die mittlere Verzögerung zu erzeugen.

Es sind jedoch verschiedene andere Varianten denkbar, mit denen ein Jitter eines vorgegebenen zeitlichen Profils erzeugt werden kann.

Die Erzeugung des Steuersignals erfolgt vorzugsweise mit Hilfe eines echten Zufallszahlengenerators oder mit Hilfe eines Pseudonoise-Generators, der mit dem Steuereingang des Verzögerungselementes verbunden ist. Beide Varianten sind ausgebildet, eine Folge von Zufallszahlen auszugeben. Bei einem echten Zufallszahlengenerator hängt die ausgegebene Zufallszahl bekanntlich von einem nicht steuerbaren Zufallsprozess ab. Beispiele echt zufälliger Prozesse sind das Rauschen eines Widerstandes oder Oszillators. Die von einem echten Zufallszahlengenerator ausgegebenen Zufallszahlen sind nicht berechenbar. Pseudonoise-Generatoren sind beispielsweise aus der Kommunikationstechnik bekannt. Pseudonoise-Generatoren werden für nicht-kryptographische Algorithmen bevorzugt, weil sie leichter zu implementieren sind. Nähere Einzelheiten werden weiter unten im Zusammenhang mit der Beschreibung weiterer bevorzugter Ausführungsbeispiele anhand der Figuren erläutert.

In einem bevorzugten Ausführungsbeispiel enthält die Hüllschaltung eine Arbitereinheit, die zwischen dem Takteingang und der internen Taktschnittstelle angeordnet ist. Die Arbitereinheit ist ausgebildet, die Erzeugung des internen Taktsignals zu stoppen, indem sie das interne Taktsignal auf einem niedrigen Signalniveau hält, das die Abwesenheit eines externen Taktsignals anzeigt, solange Eingangsdaten am Dateneingang empfangen werden oder eine Time-out-Phase andauert.

Bei einem weiteren Ausführungsbeispiel umfasst die Hüllschaltung zusätzlich einen Datenausgang für Ausgangsdatensignale, die an eine externe GALS-Schaltung ausgegeben werden. Bei dieser Ausführungsform ist die Arbiterschaltung zusätzlich ausgebildet, das interne Taktsignal auf dem niedrigen Signalniveau zu halten, solange Ausgangsdatensignale dem Ausgang zugeführt werden.

Zwei weitere Aspekte der Erfindung betreffen Verfahren zum Betreiben einer integrierten Schaltung mit einer Vielzahl GALS-Schaltungen. Gemäß einem dritten Aspekt der Erfindung weist ein solches Verfahren die folgenden Schritte auf:
- Ausgeben eines periodischen Taktsignals an alle GALS-Schaltungen;
- Erzeugen und Hinzufügen eines Zeitjitters zum Taktsignal, lokal an jeder GALS-Schaltung, wobei der jeweilige Zeitjitter das Taktsignal mit einer lokalen und individuellen Zufallssignalverzögerung versieht.

Dieses Betriebsverfahren entspricht der oben beschriebenen Ausführungsform der erfindungsgemäßen GALS-Schaltung, bei der der Jitter dem externen Taktsignal hinzugefügt wird. Dies kann mit Hilfe eines Jittergenerators im Signalpfad des externen Taktsignals vor dem Takteingang der GALS-Schaltungen erfolgen. Alternativ kann dies mit Hilfe eines Jittergenerators im Signalpfad des internen Taktsignals der GALS-Schaltungen zwischen dem jeweiligen Takteingang und der jeweiligen internen Taktschnittstelle erfolgen.

Gemäß einem weiteren Aspekt der Erfindung wird ein Verfahren zum Betreiben eines integrierten Schaltkreises mit einer Vielzahl von GALS-Schaltungen vorgeschlagen, bei der eine sendende GALS-Schaltung mit einer empfangenden GALS-Schaltung desselben integrierten Schaltkreises kommuniziert, indem Anfragesignale und Datensignale von der sendenden GALS-Schaltung zur empfangenden GALS-Schaltung gesendet werden und die empfangende GALS-Schaltung durch Senden eines Bestätigungssignals an die sendende GALS-Schaltung antwortet. Das erfindungsgemäße Verfahren enthält einen Schritt des Erzeugens und Hinzufügens eines Zeitjitters zum Anfragesignal im Datenpfad zwischen der das Anfragesignalsendenden GALS-Schaltung und der das Anfragesignal empfangenden GALS-Schaltung, oder eines Zeitjitters zu einem Bestätigungssignal im Signalpfad zwischen einer das Bestätigungssignal sendenden externen GALS-Schaltung und einem Bestätigungseingang einer das Bestätigungssignal empfangenden GALS-Schaltung, wobei der Zeitjitter das Anfragesignal mit einer Zufallssignalverzögerung lokal und individuell an der empfangenden GALS-Schaltung versieht.

Nachfolgend werden Ausführungsbeispiele anhand der Figuren erläutert. Es zeigen:
- Figur 1: eine GALS-Hüllschaltung zur Verwendung mit einem externen Taktgeber,
- Figur 2: ein Blockdiagramm eines Arbiters,
- Figuren 3a) bis f): Blockdiagramme zur Erläuterung verschiedener Möglichkeiten der Positionierung eines oder mehrerer Jittergenerators,
- Figur 4: ein Blockdiagramm zur Erläuterung der grundsätzlichen Struktur eines Jittergenerators, und
- Figur 5: ein simuliertes Leistungsspektrum des Versorgungsstromes für eine synchrone integrierte Schaltung und eine äquivalente GALS-Implementation.

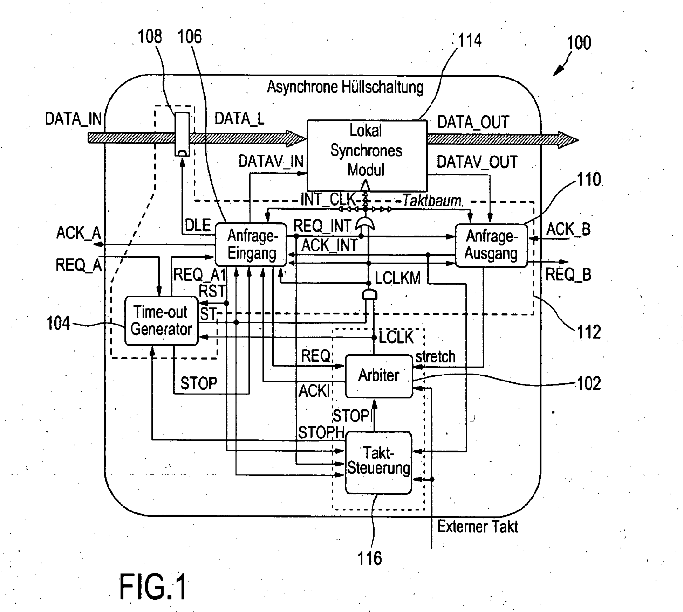

Figur 1 zeigt eine GALS-Hüllschaltung zur Verwendung mit einem externen Taktgeber. Extern getaktete GALS-Hüllschaltungen liefern die selben Vorteile wie intern getaktete Hüllschaltungen. Denn es ist nicht erforderlich, das globale Taktsignal an alle GALS-Blocks in der selben Taktphase zu liefern. Daher ist weder ein globaler Taktbaum noch eine präzise Steuerung des Zeitversatzes erforderlich. Die durch Anfrage (REQ) getriebene Betriebsweise wird nicht beeinflusst. Allerdings wird der Betrieb beim Ausleeren von Pipeline-Stufen im Time-out-Modus durch den externen Takt anstelle eines lokalen Ringoszillators gesteuert. Während des Time-out-Modus operieren benachbarte GALS-Blöcke mesochron. Das heißt, sie arbeiten mit der selben Frequenz, jedoch mit unterschiedlichen (undefinierten) Phasen.

In Figur 1 sind bekannte Hüllschaltungskomponenten wie ein Time-out-Generator 104, ein Anfrageeingang (Input Port) 106, ein Dateneingang 108 und ein Anfrageausgang für Anfragesignale an eine externe GALS-Schaltung (Output Port) 110 enthalten, die dem Fachmann bekannt sind und hier nicht näher erläutert werden. Diese bekannten Komponenten sind im Blockdiagramm der Figur 1 durch eine gestrichelte Linie 112 zusammengefasst. Weiterhin dargestellt ist ein lokal synchrones Modul 114, das nicht zur Hüllschaltung gehört, jedoch mit ihr an internen Schnittstellen verbunden ist. Die Hüllschaltung weist weiterhin eine Taktsteuerung 116 auf, die mit dem Time-out-Generator 104 und dem Arbiter 102 verbunden ist. Bei der in Figur 1 dargestellten Hüllschaltung 100 wird anstelle eines Ringoszillators ein Arbiter mit externem Takt 102 verwendet.

Die Betriebsweise der Hüllschaltung der Figur 1 wird nachfolgend in Bezug auf die Taktsynchronisation und die erfindungsgemäße Jittererzeugung näher erläutert.

Anders als bei einem Ringoszillator kann ein externer Takt nicht gestoppt werden. Daher muss die Taktbereitstellung für das lokal synchrone Modul 114 mit einem geeigneten Signal gesteuert werden, das in Figur 1 mit STOPI gekennzeichnet ist.

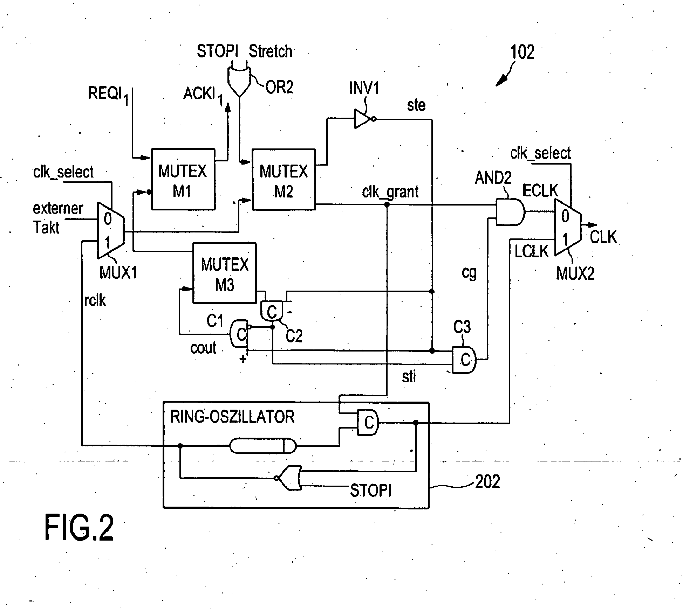

Da der externe Takt nicht mit dem Gating-Signal STOPI synchronisiert ist, kann ihre logische Kombination einen Störimpuls erzeugen. Ein solcher Störimpuls kann dann zu einer Fehlfunktion des lokal synchronen Moduls 114 führen. Daher darf das Signal STOPI seinen Wert nur während der Phase ändern, in der das Taktsignal ein niedrigen Wert einnimmt. Für diesen Zweck muss eine Arbitrierung zwischen dem Taktsignal und dem STOPI-Signal vorgesehen werden. Dies wird mit den Arbiter-Block 102 erreicht, dessen nähere Schaltungsdetails in Figur 2 dargestellt sind. Nachfolgend wird die Funktionsweise näher beschrieben.

### a) Dehnen des Taktsignals

Am Ausgang des lokal synchronen Moduls 114 tritt ein mit der Steuerung des externen Takts in Beziehung stehendes Problem auf. Während die GALS-Hüllschaltung 100 Datenvektoren ausgibt, muss das Taktsignal auf einem niedrigen Niveau (logisch Null) gehalten werden. Dies ist erforderlich, weil ein nachgeschalteter GALS-Block noch mit der Verarbeitung vorhergehender Daten beschäftigt sein kann und aktuell kein Acknowledge-Signal senden kann. Würde das lokal synchrone Modul 114 weiterhin Daten verarbeiten und sie in die Pipeline leiten, könnten vorhergehende Token überschrieben werden. Es muss daher zwischen eingehenden Anfragesignalen und dem externen Taktsignal vermittelt (arbitriert) werden. Wenn ein Anfragesignal eintrifft und die Taktsignalleitung einen hohen Wert führt, wird kein Bestätigungs(Acknowledge)-Signal erzeugt. Alternativ wird das Taktsignal gedehnt, wenn die Anfragesignalleitung das Vorliegen einer Anfrage anzeigt, bis das Anfragesignal (REQ) inaktiv wird.

Um Metastabilität während des Datentransfers zu vermeiden, kann die Hüllschaltung keine neuen Daten empfangen, während ein die Taktsignaldehnung steuerndes Stretch-Signal aktiv ist.

### b) Betrieb der Hüllschaltung mit Arbiter

Um Metastabilität zu verhindern, ist der Arbiter 102 für das Dehnen des Taktsignals verantwortlich, während an der Schnittstelle der Hüllschaltung Handshake-Aktivität stattfindet. Das bedeutet, dass das Taktsignal auf einem niedrigen Wert (logisch Null) gehalten wird, wenn Daten am Eingang der Hüllschaltung empfangen werden, während einer Time-out-Phase sowie wenn Daten am Ausgang der Hüllschaltung nach extern übertragen werden.

Das Taktsignal sollte nur während einer Phase seines logisch niedrigen Wertes gestoppt werden. Hierfür sind MUTEX-Elemente M1 und M2 vorgesehen (vgl. Figur 2), die sicherstellen, dass der Takt nur angehalten werden kann, wenn der Arbiter 102 den Zustand *external_clk=0* detektiert (MUTEX = Mutual Exclusion, wechselseitige Ausschließung). Ein drittes MUTEX-Element M3 garantiert, dass der Takt nur freigegeben werden kann, wenn der Zustand *external_clk=0* vorliegt. Asymmetrische C-Elemente C1, C2 und C3 liefern eine störfreie logische Kombination zwischen verschiedenen internen Signalen des Arbiters 102. Wenn beispielsweise das Stretch-Signal einen hohen Wert (logisch 1) annimmt, wird das Signal ste am Ausgang eines Inverters INV einen niedrigen Wert annehmen. Die Vorbedingung für diese Zustandsänderung ist, dass das Signal *external_clk,* das dem MUTEX-Element M2 über den Multiplexer MUX1 zugeleitet wird, in seiner niedrigen Phase ist. Danach geschieht folgendes: C2- -> sti- -> cg-, und folglich wird der Takt ECLK über ein UND-Glied AND2 deaktiviert. Wenn das Stretch-Signal auf einen niedrigen Wert wechselt, erfolgt ste+ -> C1+ -> C2+ (wenn das Signal *external_clk* einen niedrigen Wert annimmt) -> sti+ -> cg+, und der Takt ECLK wird wieder aktiviert. In diesem Schema kann während der Arbitrierung zwischen den Signalen cg und clk_grant ein möglicher Race auftreten. Um eine Gefahr für das ECLK-Signal zu vermeiden, muss der Pfad *external_clk* -> M2 -> clk_grant schneller sein als der Pfad Stretch -> M2 -> ste -> sti -> cg. Diese einseitige Timing-Randbedingung wird normalerweise jedoch sowieso erfüllt sein und kann ansonsten leicht erreicht werden.

### c) Dual-Mode-Betrieb

Das in Figur 2 gezeigte Ausführungsbeispiel eines Arbiters erlaubt die wahlweise Verwendung eines lokalen Ringoszillators 202 oder eines externen Taktes. Eine Hüllschaltung mit einem solchen Arbiter wird als "Dual-Mode"-Hüllschaltung bezeichnet. Sie erlaubt die Kombination der Vorteile einer externen Taktquelle und einer internen Taktquelle, indem der für die interne Taktung verwendete Ringoszillator in die Arbitereinheit 102 integriert wird. Zwei Multiplexer MUX1 und MUX2 (vgl. Figur 2) erlauben die Auswahl der jeweils zu treffenden Taktquelle. Im vorliegenden Implementierungsbeispiel kann die Taktquelle nur mit Hilfe eines Steuersignals clk_select geändert werden, wenn die Schaltung in einem LeerlaufZustand (Idle) ist, das heißt, wenn keine interne Schaltungsaktivität vorliegt.

Das duale Taktsystem erlaubt es, während des Betriebs entweder die interne oder die externe Taktquelle zu nutzen, je nach Schaltungsumgebung. Auf diese Weise kann die integrierte Schaltung mit Blick auf Datendurchsatz, Latenzzeit, Energieverbrauch und elektromagnetische Interferenz für unterschiedliche Anwendungen optimiert werden. Wenn beispielsweise die Reduktion der elektromagnetischen Interferenz von höchster Priorität ist, können interne Oszillatoren verwendet werden und der externe Takt kann komplett abgeschaltet werden. Wenn auf der anderen Seite eine Reduktion des Energieverbrauchs von höchster Priorität ist, können die Ringoszillatoren abgeschaltet und der externe Takt genutzt werden. Eine Dual-Mode-Hüllschaltung kann auch für fehlertolerante Systeme verwendet werden. Wenn beispielsweise eine externe Einheit detektiert, dass ein Quarzoszillator defekt ist, können die lokalen Ringoszillatoren aktiviert werden, um die Systemfunktion aufrechtzuerhalten.

Es versteht sich jedoch, dass der Arbiter 102 auch allein für den Betrieb mit einer externen Taktquelle ausgebildet sein kann. Hierfür können dann in der Arbiterschaltung der Figur 2 die Multiplexer MUX1 und MUX2 sowie der Ringoszillatorblock 202 entfallen.

### d) Lokaler Jitter

GALS-Systeme mit einer externen Taktquelle haben eine große Anzahl Vorteile. Sie sind leicht zu entwerfen, haben einen geringen Leistungsbedarf und benötigen eine geringe Chipfläche. Im Vergleich mit einem System mit lokalen Ringoszillatoren führen sie jedoch einen Nachteil wieder ein: Die elektromagnetische Interferenz (EMI) wird erhöht, weil große Teile eines integrierten Schaltkreises bei exakt der selben Frequenz, wenn auch mit unterschiedlicher Phase arbeiten. In bekannten synchronen Schaltungsdesigns wird ein globaler Taktjitter verwendet, um die elektromagnetische Strahlung (Electromagnetic Radiation, EMR) zu reduzieren. Ein solcher globaler Taktjitter reduziert jedoch nicht die Spitzenleistung im Zeitbereich.

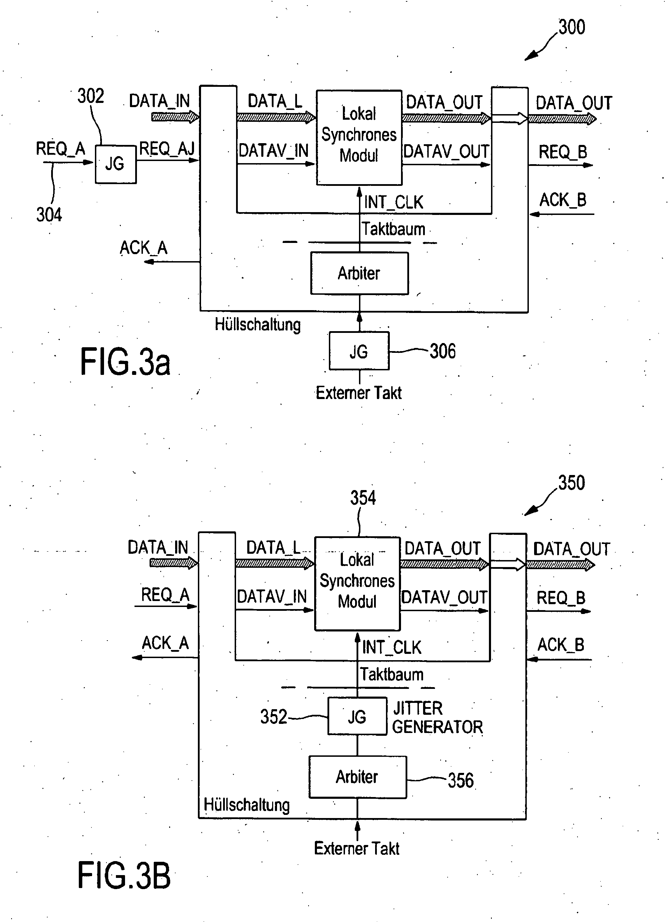

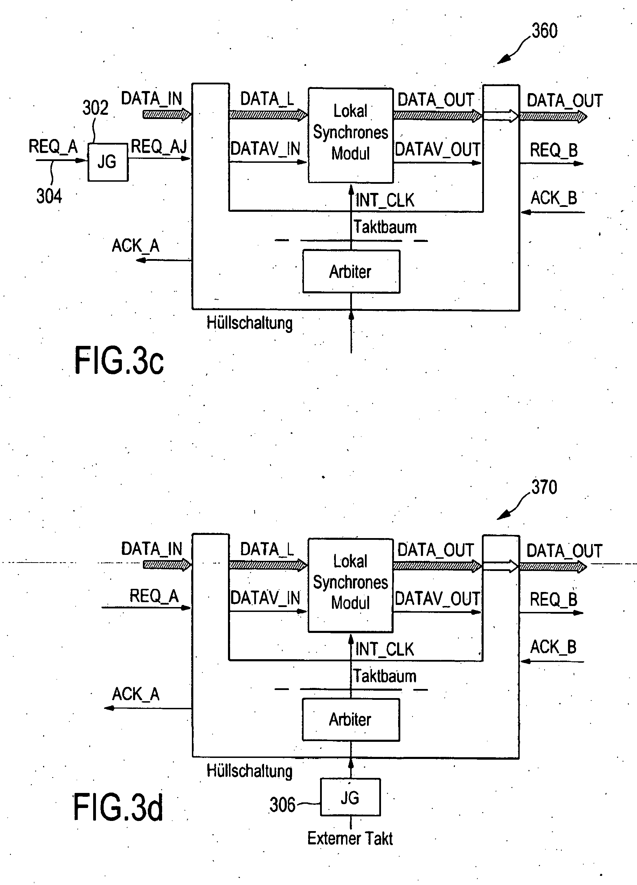

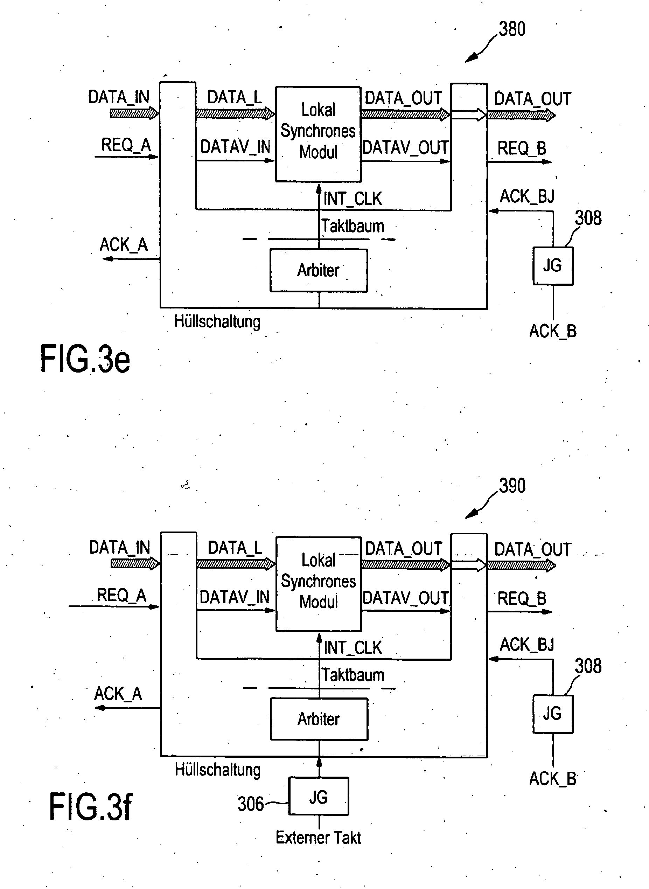

Vorliegend wird ein blockweiser Jitter verwendet, um auch die Spitzenleistung zu reduzieren. Dieser blockweise Ansatz hat den Vorteil, dass sowohl Oberwellen der Taktfrequenz als auch die Spitzenleistung reduziert werden. Zwei alternative Techniken sind möglich und in den Figuren 3a und 3b dargestellt. Dabei werden für Jittergeneratoren in unterschiedlichen Ausführungsbeispielen dieselben Bezugszeichen verwendet, wenn die betreffenden Jittergeneratoren identisch angeordnet sind.
i) Bei der in Figur 3a dargestellten Alternative einer GALS-Schaltung 300 ist ein Jittergenerator 302 in den Signalpfad der eingehenden Anfrageleitung 304 (REQ) jedes Blocks eingefügt werden. Zusätzlich wird für einen Betrieb im Time-out-Modus, ein weiterer Jittergenerator 306 in den Signalpfad des externen Taktsignals eingefügt.
ii) In einem in Figur 3b dargestellten alternativen Ausführungsbeispiel einer GALS-Schaltung 350 wird ein Jittergenerator 352 vor den Takteingang des lokal synchronen Moduls 354 geschaltet. Er ist hier im Signalpfad also zwischen einem Arbiter 356, der das externe Taktsignal empfängt, und dem lokal synchronen Modul 354 angeordnet, und fügt dem internen Taktsignal Jitter hinzu. Bei Verwendung eines Jittergenerators in der hier gezeigten Anordnung ist die Verwendung eines weiteren Jittergenerators im Signalpfad des Anfragesignals oder des Bestätigungssignals nicht notwendig und nicht sinnvoll.
iii) In einem in Figur 3c dargestellten alternativen Ausführungsbeispiel einer GALS-Schaltung 360 ist lediglich ein Jittergenerator 302 im Signalpfad der eingehenden Anfrageleitung 304 (REQ) jedes Blocks eingefügt.
iv) In einer in Figur 3d dargestellten alternativen Ausführungsform einer GALS-Schaltung 370 ist allein ein Jittergenerator 306 in den Signalpfad des externen Taktsignals vor der einem Taktsignaleingang Hüllschaltung eingefügt.
v) In einem Figur 3e dargestellten Ausführungsbeispiel einer GALS-Schaltung 380 ist ein Jittergenerator 308 in den Signalpfad eines von einer externen GALS-Schaltung eingehenden Bestätigungssignals (ACK_B) eingefügt.
vi) In einem in Figur 3f dargestellten Ausführungsbeispiel einer Hüllschaltung 390 ist ein Jittergenerator 308 in den Signalpfad des von extern eingehenden Bestätigungssignals und ein weiterer Jittergenerator 306 in den Signalpfad des eingehenden externen Taktsignals eingefügt.

Alle Ausführungsbeispiele, die in den Figuren 3a bis 3f gezeigt sind, zeigen ähnliche Ergebnisse. Das Ausführungsbeispiel der Figur 3b benötigt im Vergleich mit den anderen dort gezeigten Ausführungsbeispielen eine geringere Chipfläche und verbraucht weniger Energie.

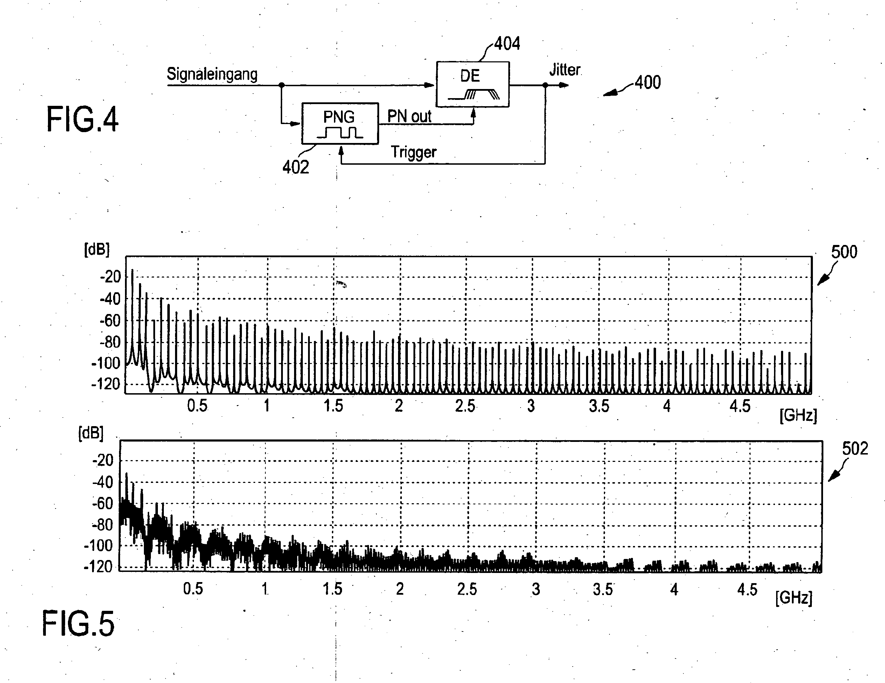

Figur 4 zeigt ein Blockdiagramm mit einem Ausführungsbeispiel eines Jittergenerators 400. Der Jittergenerator dient zur Erzeugung einer Zufallssignal-Verzögerung eines Taktsignals oder eines Anfragesignals am Anfrageeingang der Hüllschaltung. Der Jittergenerator 400 enthält einen Pseudonoisegenerator (PNG) 402 und eine mit diesem verbundene programmierbare Verzögerungsstrecke 404. Der Ausgang des Pseudonoisegenerators 402 ist an einen Steuereingang der programmierbaren Verzögerungsstrecke 404 geführt. Diese verzögert die Ausgabe eines an ihrem Signaleingang anliegenden Signals um eine Zeitspanne, deren Dauer vom aktuellen Ausgangswert des Pseudonoisegenerators 402 abhängt. Am Ausgang des programmierbaren Verzögerungselements erscheint daher ein mit einem Jitter versehenes Ausgangssignal, das an eine nachgeschaltete Einheit ausgeben und parallel zum Betrieb des PNG genutzt werden.

Jittergeneratoren mit einem echten Zufallsgenerator werden in kryptographischen Anwendungen mit GALS-Schaltungen bevorzugt. Damit lässt sich die Analyse solcher Schaltungen und das "Knacken" ihrer Funktionsweise (zum Zwecke des Missbrauchs) erheblich erschweren. Echten Zufallsgeneratoren liegt ein zufälliger physikalischer Prozess zugrunde, der bei jedem Start des Zufallsgenerators unterschiedliche Sequenzen liefert. Für nicht-kryptographische Anwendungen können Pseudonoise-Generatoren verwendet werden. Pseudenoise-Generatoren mit standardisierten digitalen Gattern sind leichter zu implementieren. Pseudonoise-Generatoren erzeugen pseudozufällige Sequenzen. Wird ein identischer Startwert eingegeben, erzeugen sie stets die selbe Sequenz.

Für programmierbare Verzögerungselemente sind sowohl analoge als auch digitale Lösungen bekannt. Eine bekannte Jittererzeugungsmethode ist die analoge Phasenmodulation. Eine spannungsgesteuerte Verzögerungsleitung mit Puffern ist bekannt aus Tian Xia Peilin Song, Keith A. Jenkins Jien-Chung Lo, Delay Chain Based Programmable Jitter Generator, Proceedings of the Ninth IEEE European Test Symposium (ETS'04) 2004. Digitale programmierbare Verzögerungselemente verwenden auch Inverterketten. Ein Multiplexer wählt zufällig einen Verzögerungsleitungsausgang aus. Jedes Signalereignis startet eine nächste Pseudonoise-Erzeugung.

Für hohe Taktfrequenzen werden einfache lineare Rückkopplungsschieberegister (Linear Feedback Shift Registers, LFSR) bevorzugt. Bei einer vorgegebenen Technologie arbeiten sie mit nahezu der maximalen Flip-Flop-Kippfrequenz.

Für niedrigere Frequenzen werden Pseudonoise-Generatoren verwendet, weil sie bessere statistische Eigenschaften haben.

Die Auswirkung eines Taktjitters auf synchrone Schaltungen wurde beschrieben in der Arbeit Mustafa Badaroglu, Piet Wambacq, Geert Van der Plas, Stephane Donnay, Georges Gielen, and Hugo De Man, Digital Ground Bounce Reduction by Phase Modulation of the Clock, Proceedings of the Design, Automation and Test in Europe Conference and Exhibition (DATE'04) 2004. Durch Verwendung einer Taktphasenmodulation wurden die spektralen Energiemaxima um bis zu 16 db reduziert. Ein höherer Modulationsindex erzeugt geringere spektrale Peaks, reduziert jedoch die Verarbeitungsleistung, d.h. die durchschnittliche Taktfrequenz geringfügig. Die besten Ergebnisse werden erwartungsgemäß mit einer Random-Noise-Phasenmodulation erzielt.

### e) Simulationsergebnisse

In einem Matlab-Modell wurde der Effekt der Erzeugung eines Taktjitters untersucht. Es wurde der Versorgungsstrom eines typischen GALS-Systems berechnet und mit einem äquivalenten synchronen System verglichen. Für das synchrone System wurde eine dreieckige Wellenform des Stroms mit einer Anstiegszeit von 5 ns und einer Abfallzeit von 10 ns angenommen. Der maximale angenommene Wert des Versorgungsstroms war I_{DD} = 1 A, und die Taktperiode wurde mit 20 ns zugrunde gelegt (entsprechend 50 MHz). Es wurde weiterhin angenommen, dass die GALS-Schaltung einer in 10 Blöcke aufgespaltenen synchronen Schaltung entspricht. Die "Größe" dieser Blöcke wurde entsprechend ihrem maximalen Versorgungsstrom wie folgt angenommen: zwei Blöcke mit jeweils 200 mA, vier Blöcke mit jeweils 100 mA sowie vier Blöcke mit jeweils 50 mA. Die Anstiegs- und Abfallzeiten wurden nicht geändert. Jede der zehn Strom-Wellenformen wurde mit einer gleichverteilten Zufallsphase im Bereich +/- 10 ns versehen. Anschließend wurde jeder der Wellenformen ein gleichverteilter Zufallsjitter im Bereich von +/- 1 ns hinzugefügt. Die zehn Wellenformen, die jeweils den Versorgungsstrom eines GALS-Blockes repräsentieren, wurden addiert, um den Gesamtversorgungsstrom zu bestimmen. Anschließend wurde das Leistungsspektrum des gesamten Versorgungsstroms berechnet. Hierzu wurde eine Fourier-Transformation durchgeführt.

Figur 5 zeigt die Ergebnisse der Berechnung anhand zweier Spektren 500 und 502. In beiden Spektren ist das Fourier-Spektrum des Gesamtversorgungsstroms in Einheiten von GHz aufgetragen. Die Amplitude ist in dB angegeben. Die Frequenz ist in linearen Einheiten angegeben. Wie anhand eines Vergleichs der Spektren erkennbar ist, ist die Amplitude der spektralen Komponenten im GALS-System gegenüber dem synchronen System in einem breiten spektralen Bereich um etwa 15 dB reduziert. Weiterhin zeigt sich bei einer Zeit-Domänen-Betrachtung, dass die Strompeaks des Versorgungsstroms auf etwa 30 % gegenüber dem synchronen System reduziert sind.

## Patentansprüche

1. Global Asynchrone Lokal Synchrone GALS-Schaltung zur Verwendung in einer integrierten Schaltung, welche eine Vielzahl GALS-Schaltungen enthält, wobei die GALS-Schaltung eine Hüllschaltung und ein lokal synchrones Schaltungsmodul (114) enthält, das mit der Hüllschaltung verbunden ist,
bei der die Hüllschaltung (100, 300, 350) einen Anfrageeingang (106) für Anfragesignale (REQ_A) von einer externen GALS-Schaltung, einen Dateneingang (108) für Datensignale (DATA_IN) von einer externen GALS-Schaltung, und einen Takteingang für ein periodisches Taktsignal (external_clock) von einem externen Taktgeber aufweist, und bei der die Hüllschaltung ausgebildet ist,
- aus dem externen Anfragesignal ein internes Anfragesignal (REQ_INT) abzuleiten, welches anzeigt, dass gültige Datensignale am Dateneingang empfangen werden, und das interne Anfragesignal über eine interne Anfrageschnittstelle an das lokal synchrone Schaltungsmodul weiterzuleiten, sowie
- von dem externen Taktsignal ein internes Taktsignal (INT_CLK) abzuleiten und über eine interne Taktschnittstelle an das lokal synchrone Schaltungsmodul auszugeben,
**dadurch gekennzeichnet, dass**
die GALS-Schaltung mindestens einen Jitter-Generator (302, 306, 308, 352) umfasst, der im Signalpfad des externen oder internen Anfragesignals der internen Anfrageschnittstelle vorgeschaltet ist, oder der im Signalpfad des externen oder internen Taktsignals der internen Taktschnittstelle vorgeschaltet ist, oder einem Bestätigungseingang (110) der Hüllschaltung für Bestätigungssignale (ACK_B) von einer externen GALS-Schaltung vorgeschaltet ist, und der ausgebildet ist, das jeweilige Signal zu empfangen, mit einer bezüglich der GALS-Schaltung lokalen und individuellen Zufallssignalverzögerung zu versehen und auszugeben.

2. GALS-Schaltung (360) nach Anspruch 1, bei der allein ein Jitter-Generator (302) im Signalpfad des externen Anfragesignals dem Anfrageeingang der Hüllschaltung vorgeschaltet ist.

3. GALS-Schaltung (370) nach Anspruch 1, bei der allein ein Jitter-Generator (306) im Signalpfad des externen Taktsignals dem Takteingang der Hüllschaltung vorgeschaltet ist.

4. GALS-Schaltung nach Anspruch 1, bei der ein erster Jitter-Generator (302) im Signalpfad des externen Anfragesignals dem Anfrageeingang der Hüllschaltung (300) vorgeschaltet ist und ein zweiter Jitter-Generator (306) im Signalpfad des externen Taktsignals dem Takteingang der Hüllschaltung (300) vorgeschaltet ist.

5. GALS-Schaltung (380) nach Anspruch 1, bei allein ein Jitter-Generator (308) im Signalpfad des externen Bestätigungssignals dem Bestätigungseingang der Hüllschaltung vorgeschaltet ist.

6. GALS-Schaltung (390) nach Anspruch 1, bei der ein erster Jitter-Generator (308) im Signalpfad des externen Bestätigungssignals dem Bestätigungseingang der Hüllschaltung vorgeschaltet ist und ein zweiter Jitter-Generator (306) im Signalpfad des externen Taktsignals dem Takteingang der Hüllschaltung vorgeschaltet ist.

7. GALS-Schaltung nach Anspruch 1, bei der allein ein Jitter-Generator (352) im Signalpfad des internen Taktsignals zwischen dem Takteingang und der internen Taktschnittstelle angeordnet ist.

8. GALS-Schaltung nach einem der vorstehenden Ansprüche, bei der der mindestens eine Jitter-Generator (400) ein programmierbares Verzögerungselement (404) enthält, das einen Signaleingang, einen Signalausgang und einen Steuereingang umfasst, und das ausgebildet ist, ein Signal am Signaleingang zu empfangen und es mit einer Verzögerung am Signalausgang auszugeben, wobei der Verzögerungsbetrag von einem Steuersignal am Steuereingang abhängt.

9. GALS-Schaltung nach Anspruch 8, mit einem echten Zufallszahlengenerator oder einem Pseudonoise-Generator (402), der mit dem Steuereingang des Verzögerungselementes verbunden ist und ausgebildet ist, eine Folge von Zufallszahlen auszugeben.

10. GALS-Schaltung nach einem der vorstehenden Ansprüche, bei der die Hüllschaltung eine Arbitereinheit (356, 102) enthält, die zwischen dem Takteingang und der internen Taktschnittstelle angeordnet ist und die ausgebildet ist, die Erzeugung des internen Taktsignals zu stoppen, indem sie das interne Taktsignal auf einem niedrigen Signalniveau hält, das die Abwesenheit eines externen Taktsignals anzeigt, solange Eingangsdaten am Dateneingang empfangen werden oder eine Time-out-Phase andauert.

11. GALS-Schaltung nach Anspruch 10, bei der die Hüllschaltung einen Datenausgang für Ausgangsdatensignale umfasst, die an eine externe GALS-Schaltung ausgegeben werden, und bei der die Arbiterschaltung (356, 102) zusätzlich ausgebildet ist, das interne Taktsignal auf dem niedrigen Signalniveau zu halten, solange Ausgangsdatensignale dem Ausgang zugeführt werden.

12. GALS-Schaltung nach Anspruch 10 oder 11, bei der die Hüllschaltung einen lokalen Taktgeber enthält, der ausgebildet ist, ein lokales Taktsignal zu erzeugen, und bei der die Hüllschaltung ausgebildet ist, in Abhängigkeit von einem Taktsteuersignal entweder das lokale Taktsignal oder das interne Taktsignal an die interne Taktschnittstelle zu leiten.

13. Integrierte Schaltung mit einer Vielzahl GALS-Schaltungen nach einem der vorstehenden Ansprüche, und mit einem Taktgeber, der mit den Hüllschaltungen der GALS-Schaltungen verbunden ist und ihnen ein externes Taktsignal zuleitet.

14. Verfahren zum Betreiben einer integrierten Schaltung mit einer Vielzahl GALS-Schaltungen, mit den Schritten:
- Ausgeben eines periodischen Taktsignals an alle GALS-Schaltungen;
**dadurch gekennzeichnet, dass** das Verfahren den zusätzlichen Schritt umfasst:
- Erzeugen und Hinzufügen eines Zeit-Jitters zum Taktsignal, lokal an jeder GALS-Schaltung, wobei der jeweilige Zeit-Jitter das Taktsignal mit einer lokalen und individuellen Zufallssignalverzögerung versieht.

15. Verfahren zum Betreiben einer integrierten Schaltung mit einer Vielzahl von GALS-Schaltungen, bei der eine sendende GALS-Schaltung mit einer empfangenden GALS-Schaltung desselben integrierten Schaltkreises kommuniziert, indem Anfragesignale und Datensignale von der sendenden GALS-Schaltung zur empfangenden GALS-Schaltung gesendet werden und die empfangende GALS-Schaltung durch Senden eines Bestätigungssignals an die sendende GALS-Schaltung antwortet,
**dadurch gekennzeichnet, dass** das Verfahren den zusätzlichen Schritt enthält:
Erzeugen und Hinzufügen eines Zeitjitters zum Anfragesignal im Datenpfad zwischen der sendenden GALS-Schaltung und der empfangenden GALS-Schaltung,
oder eines Zeitjitters zu einem Bestätigungssignal im Signalpfad zwischen einer das Bestätigungssignal sendenden externen GALS-Schaltung und einem Bestätigungseingang einer das Bestätigungssignal empfangenden GALS-Schaltung, wobei der Zeitjitter das Anfragesignal mit einer Zufallssignalverzögerung lokal und
invidivuell an der empfangenden GALS-Schaltung versieht.

16. Verfahren nach Anspruch 15 mit den zusätzlichen Schritten:
- Ausgeben eines periodischen Taktsignals an alle GALS-Schaltungen;
- Erzeugen und Hinzufügen eines Zeit-Jitters zum Taktsignal, lokal an jeder GALS-Schaltung, wobei der jeweilige Zeit-Jitter das Taktsignal mit einer lokalen und individuellen Zufallssignalverzögerung versieht,
und wobei der jeweilige Zeit-Jitter des externen Taktsignals im Signalpfad vor einem Takteingang einer der jeweiligen GALS-Schaltung zugeordneten Hüllschaltung hinzugefügt wird.

## Claims

1. Globally Asynchronous Locally Synchronous GALS circuit for use in an integrated circuit which contains a plurality of GALS circuits, the GALS circuit containing a wrapper circuit and a locally synchronous circuit module (114) which is connected to the wrapper circuit,
wherein the wrapper circuit (100, 300, 350) comprises a request input (106) for request signals (REQ_A) from an external GALS circuit, a data input (108) for data signals (DATA_IN) from an external GALS circuit, and a clock input for a periodic clock signal (external_clock) from an external clock, and wherein the wrapper circuit is configured
- to derive from the external request signal an internal request signal (REQ_INT) which indicates that valid data signals are being received at the data input, and to route the internal request signal via an internal request interface to the locally synchronous circuit module, and
- to derive an internal clock signal (INT_CLK) from the external clock signal and to emit it via an internal clock interface to the locally synchronous circuit module,
**characterised in that**
the GALS circuit comprises at least one jitter generator (302, 306, 308, 352) which is connected upstream of the internal request interface in the signal path of the external or internal request signal, or which is connected upstream of the internal clock interface in the signal path of the external or internal clock signal, or is connected upstream of an acknowledgment input (110) of the wrapper circuit for acknowledgment signals (ACK_B) from an external GALS circuit, and which is configured to receive the respective signal, provide it with a random signal delay that is individual and local to the GALS circuit and to emit it.

2. GALS circuit (360) according to claim 1, wherein a single jitter generator (302) is connected upstream of the request input of the wrapper circuit in the signal path of the external request signal.

3. GALS circuit (370) according to claim 1, wherein a single jitter generator (306) is connected upstream of the clock input of the wrapper circuit in the signal path of the external clock signal.

4. GALS circuit according to claim 1, wherein a first jitter generator (302) is connected upstream of the request input of the wrapper circuit (300) in the signal path of the external request signal and a second jitter generator (306) is connected upstream of the clock input of the wrapper circuit (300) in the signal path of the external clock signal.

5. GALS circuit (380) according to claim 1, wherein a single jitter generator (308) is connected upstream of the acknowledgment input of the wrapper circuit in the signal path of the external acknowledgment signal.

6. GALS circuit (390) according to claim 1, wherein a first jitter generator (308) is connected upstream of the acknowledgment input of the wrapper circuit in the signal path of the external acknowledgment signal and a second jitter generator (306) is connected upstream of the clock input of the wrapper circuit in the signal path of the external clock signal.

7. GALS circuit according to claim 1, wherein a single jitter generator (352) is arranged between the clock input and the internal clock interface in the signal path of the internal clock signal.

8. GALS circuit according to one of the preceding claims, wherein the at least one jitter generator (400) contains a programmable delay element (404) which comprises a signal input, a signal output and a control input, and which is configured to receive a signal at the signal input and to emit it with a delay at the signal output, the amount of delay being dependent on a control signal at the control input.

9. GALS circuit according to claim 8, having a true random number generator or a pseudonoise generator (402), which is connected to the control input of the delay element and is configured to emit a sequence of random numbers.

10. GALS circuit according to one of the preceding claims, wherein the wrapper circuit contains an arbiter unit (356, 102) which is arranged between the clock input and the internal clock interface and which is configured to stop the generation of the internal clock signal by keeping the internal clock signal at a low signal level which indicates the absence of an external clock signal, as long as input data are being received at the data input or a time-out phase is running.

11. GALS circuit according to claim 10, wherein the wrapper circuit comprises a data output for output data signals which are emitted to an external GALS circuit, and wherein the arbiter circuit (356, 102) is additionally configured to keep the internal clock signal at the low signal level as long as output data signals are being supplied to the output.

12. GALS circuit according to claim 10 or 11, wherein the wrapper circuit contains a local clock which is configured to generate a local clock signal, and wherein the wrapper circuit is configured to route either the local clock signal or the internal clock signal to the internal clock interface depending on a clock control signal.

13. Integrated circuit having a plurality of GALS circuits according to one of the preceding claims, and having a clock which is connected to the wrapper circuits of the GALS circuits and sends them an external clock signal.

14. Method of operating an integrated circuit having a plurality of GALS circuits, comprising the steps of:
- emitting a periodic clock signal to all the GALS circuits;
**characterised in that** the method comprises the additional step of:
- generating and adding a time jitter to the clock signal, locally at each GALS circuit, the respective time jitter providing the clock signal with a local and individual random signal delay.

15. Method of operating an integrated circuit having a plurality of GALS circuits, wherein a transmitting GALS circuit communicates with a receiving GALS circuit of the same integrated circuit, whereby request signals and data signals are sent from the transmitting GALS circuit to the receiving GALS circuit and the receiving GALS circuit responds to the transmitting GALS circuit by sending an acknowledgment signal,
**characterised in that** the method contains the additional step of:
generating and adding a time jitter to the request signal in the data path between the transmitting GALS circuit and the receiving GALS circuit, or a time jitter to an acknowledgment signal in the signal path between an external GALS circuit transmitting the acknowledgment signal and an acknowledgment input of a GALS circuit receiving the acknowledgment signal, the time jitter providing the request signal with a random signal delay locally and individually at the receiving GALS circuit.

16. Method according to claim 15, comprising the additional steps of:
- emitting a periodic clock signal to all the GALS circuits;
- generating and adding a time jitter to the clock signal, locally at each GALS circuit, the respective time jitter providing the clock signal with a local and individual random signal delay,
and wherein the respective time jitter of the external clock signal is added in the signal path upstream of a clock input of a wrapper circuit associated with the respective GALS circuit.

## Revendications

1. Circuit GALS (Global Asynchrone Local Synchrone) destiné à être utilisé dans un circuit intégré, qui contient une pluralité de circuits GALS, le circuit GALS contenant un circuit enveloppe et un module de circuit local synchrone (114), qui est relié au circuit enveloppe,
dans lequel le circuit enveloppe (100, 300, 350) comprend une entrée de requête (106) pour des signaux de requête(REG_A) d'un circuit GALS externe, une entrée de données (108) pour des signaux de données (DATA_IN) d'un circuit GALS externe, et une entrée d'horloge pour un signal d'horloge périodique (external_clock) d'une horloge externe, et dans lequel le circuit enveloppe est conçu
- pour dériver, à partir du signal de requête externe, un signal de requête interne (REQ_INT) qui montre que des signaux de données valables sont reçus à l'entrée de données et pour transmettre le signal de requête interne au module de circuit local synchrone par l'intermédiaire d'une interface de requête, et
- pour dériver, à partir d'un signal d'horloge externe, un signal d'horloge interne (INT_CLK) et pour l'émettre vers le module de circuit local synchrone par l'intermédiaire d'une interface d'horloge interne,
**caractérisé en ce que**
le circuit GALS comprend au moins un générateur de gigue (302, 306, 308, 352) qui est branché en amont dans le chemin du signal de requête externe ou interne de l'interface de requête interne ou qui est branché en amont dans le chemin du signal d'horloge externe ou interne de l'interface de requête interne, ou est branché en amont d'une entrée d'accusé de réception (110) du circuit enveloppe pour signaux d'accusé de réception (ACK_B) d'un circuit GALS externe, et qui est conçu pour recevoir un signal correspondant, le munir d'une temporisation de signal aléatoire locale individuelle par rapport au circuit GALS et l'émettre.

2. Circuit GALS (360) selon la revendication 1, dans lequel un seul générateur de gigue (302) est branché dans le chemin du signal de requête externe en amont de l'entrée de requête du circuit enveloppe.

3. Circuit GALS (370) selon la revendication 1, dans lequel un seul générateur de gigue (306) est branché dans le chemin du signal d'horloge externe en amont de l'entrée d'horloge du circuit enveloppe.

4. Circuit GALS selon la revendication 1, dans lequel un premier générateur de gigue (302) est branché dans le chemin du signal de requête externe en amont de l'entrée de requête du circuit enveloppe (300) et un deuxième générateur de gigue (306) est branché dans le chemin du signal du signal d'horloge externe en amont de l'entrée d'horloge du circuit enveloppe (300).

5. Circuit GALS (380) selon la revendication 1, dans lequel un seul générateur de gigue (308) est branché dans le chemin du signal d'accusé de réception externe en amont de l'entrée d'accusé de réception du circuit enveloppe.

6. Circuit GALS (390) selon la revendication 1, dans lequel un premier générateur de gigue (308) est branché dans le chemin du signal d'accusé de réception externe en amont de l'entrée d'accusé de réception du circuit enveloppe et un deuxième générateur de gigue (306) est branché dans le chemin du signal du signal d'horloge externe en amont de l'entrée d'horloge du circuit enveloppe.

7. Circuit GALS (380) selon la revendication 1, dans lequel un seul générateur de gigue (352) est branché dans le chemin du signal d'horloge interne entre l'entrée d'horloge et l'interface d'horloge interne.

8. Circuit GALS selon l'une des revendications précédentes, dans lequel au moins un générateur de gigue (400) contient un élément de temporisation programmable (404) qui comprend une entrée de signaux, une sortie de signaux et une entrée de commande et qui est conçu pour recevoir un signal au niveau de l'entrée de signaux et l'émettre avec une temporisation au niveau de la sortie de signaux, la valeur de la temporisation dépendant d'un signal de commande au niveau de l'entrée de commande.

9. Circuit GALS selon la revendication 8, avec un générateur de nombres aléatoires authentiques ou un générateur de pseudo-bruit (402) qui est relié à l'entrée de commande de l'élément de temporisation et qui est conçu pour émettre une série de nombres aléatoires.

10. Circuit GALS selon l'une des revendications précédentes, dans lequel le circuit enveloppe contient un module d'arbitrage (356, 102), qui est disposé entre l'entrée d'horloge et l'interface d'horloge interne et qui est conçu pour arrêter la production du signal d'horloge interne, en maintenant le signal d'horloge interne à un niveau de signal bas, qui montre la présence d'un signal d'horloge externe tant que des données d'entrée sont reçues au niveau de l'entrée de données ou qu'une phase time-out dure.

11. Circuit GALS selon la revendication 10, dans lequel le circuit enveloppe comprend une sortie de données pour des signaux de données de sortie, qui sont envoyés à un circuit GALS externe et dans lequel le circuit d'arbitrage (356, 102) est en outre conçu pour maintenir le signal d'horloge interne à un niveau de signal bas tant que des signaux de données de sortie sont introduits au niveau de la sortie.

12. Circuit GALS selon la revendication 10 ou 11, dans lequel le circuit enveloppe contient une horloge locale qui est conçue pour générer un signal d'horloge local et dans lequel le circuit enveloppe est conçu pour envoyer, en fonction d'un signal de commande d'horloge, soit le signal d'horloge local soit le signal d'horloge interne, vers l'interface d'horloge interne.

13. Circuit intégré avec une pluralité de circuits GALS selon l'une des revendications précédentes, et avec une horloge qui est reliée avec les circuits enveloppes des circuits GALS et leur envoie un signal d'horloge externe.

14. Procédé d'utilisation d'un circuit intégré avec une pluralité de circuits GALS, comprenant les étapes suivantes :
- envoi d'un signal d'horloge périodique à tous les circuits GALS ;
**caractérisé en ce que** le procédé comprend l'étape supplémentaire suivante :
- génération et ajout d'une gigue de temps au signal d'horloge, localement à chaque circuit GALS, la gigue de temps munissant le signal d'horloge d'une temporisation de signal aléatoire local et individuel.

15. Procédé d'utilisation d'un circuit intégré avec une pluralité de circuits GALS, dans lequel un circuit GALS émetteur communique avec un circuit GALS récepteur du même circuit intégré, du fait que des signaux de requête et des signaux de données sont envoyés par le circuit GALS émetteur au circuit GALS récepteur et le circuit GALS récepteur répond par l'envoi d'un signal d'accusé de réception au circuit GALS émetteur,
**caractérisé en ce que** le procédé comprend l'étape supplémentaire suivante :
génération et ajout d'une gigue de temps au signal de requête dans le chemin de données entre le circuit GALS émetteur et le circuit GALS récepteur, ou d'une gigue de temps à un signal d'accusé de réception dans le chemin de signal entre un circuit GALS externe émettant le signal d'accusé de réception et à un signal d'accusé de réception d'un circuit GALS recevant le signal d'accusé de réception, la gigue de temps munissant le signal de requête d'une temporisation de signal aléatoire localement et individuellement au niveau du circuit GALS récepteur.

16. Procédé selon la revendication 15, comprenant les étapes supplémentaires suivantes :
- émission d'un signal d'horloge périodique vers tous les circuits GALS ;
- génération et ajout d'une gigue de temps au signal d'horloge, localement à un circuit GALS, la gigue de temps correspondante munissant le signal d'horloge d'une temporisation de signal aléatoire locale et individuelle,
et la gigue de temps correspondante du signal d'horloge externe étant ajoutée avant une entrée d'horloge d'un circuit enveloppe correspondant au circuit GALS concerné.
